# EUROPEAN PATENT SPECIFICATION

(11) **EP 1 713 344 B1**
(45) Date of publication and mention of the grant of the patent: **03.04.2019**
(21) Application number: 05706370.3
(22) Date of filing: 14.02.2005
(51) Int. Cl.: A23L 29/231, A21D 13/28

(54) **COLD GELLING PASTRY GLAZE BASED ON PECTIN**
KALTGELIERENDE BACKWARENGLASUR AUF PEKTINGRUNDLAGE
NAPPAGE DE PÂTISSERIE GÉLIFIANT À FROID À BASE DE PECTINE

(30) Priority: 13.02.2004 EP 04447039
(43) Date of publication of application: 25.10.2006
(73) Proprietor: PURATOS N.V., 1702 Groot-Bijgaarden (BE)
(72) Inventor: CHEVALIER, Olivier, B-7800 ATH (BE); NAUDTS, Isabelle, B-1750 ST-KWINTENS-LENNIK (BE); SOYEUR, Jean-Luc, B-7850 ENGHIEN (BE)
(74) Representative: De Clercq, Ann G. Y.
(86) International application number: PCT/BE2005/000019
(87) International publication number: WO 2005/077195

(56) References cited:
- EP-A- 0 758 531
- EP-A- 0 808 580
- EP-A- 0 887 020
- WO-A-2004/005352
- GB-A- 2 078 082
- GB-A- 2 194 876
- US-A- 2 233 574
- US-A- 2 878 127
- US-A- 5 753 286
- US-B1- 6 290 999
- US-B1- 6 379 724
- "Nappage Cake Glaze" 2002, HERBSTREITH&FOX , XP002285887 the whole document

## Description

### Field of the invention

The present invention relates to cold gelling pastry glazes, to their preparation and their use.

### Background

Pastry glazes are jelly solutions that are applied on pastry products such as fruit pies, viennoiseries, danishes... with the purpose of making them shine, protecting them from the air, adding a flavored layer etc.

Originally, these glazes were prepared by the baker himself from fruit purees, sugar and water. They are now manufactured from sugars (such as saccharose, glucose, ...), water, fruits (such as fruit purees, fruit juices or extracts) and gelling agents (such as pectins, carrageenans, ...), acid, salts, preservatives etc.

Three main types of pastry glazes are currently present on the market:
- Thermoreversible concentrated glazes,
- Thermoreversible ready-to-use sprayable glazes, and
- Cold use thixotropic glazes.

Concentrated glazes are the most traditional ones. They have a brix of about 60° to about 70° and a pH < 4. A brix of about 60° to about 70° means that these glazes contain about 50% to about 75% soluble solid.

Concentrated glazes have to be diluted with water (from 10 % to maximally 100 % of the weight of the glaze) before use. They are thermoreversible. This means that they are liquid at higher temperatures (typically > 60 °C) and become solid at lower temperatures (typically < 50 °C). The temperature cycle of liquefying and solidifying is repeatable indefinitely.

Below a classical composition of such a concentrated glaze is given (Table 1):

**Table 1**

| **Component** | **Amount (%)** |
|---|---|
| Water | 33.566 |
| Sugar | 45.79 |
| Glucose syrup | 18.13 |
| Citric acid (sol. 50% w/w) | 0.95 |
| Tri-sodium citrate | 0.095 |
| K-Sorbate (sol. 33% w/w) | 0.3 |
| CaCl₂ dihydrate | 0.019 |
| Pectin (28 D.M.; 22 D.A.) | 1.15 |

| | |
|---|---|
| Brix: 65 % pH: 3.5 D.M.: degree of methoxylation D.A.: degree of amidation | |

The above glazes contain pectin and other gelling and/or viscosifying agents.

Pectin is the most common choice of gelling agent for the manufacture of glazes, for several reasons. First, it is naturally present in fruits and thus in fruit purees which are used to prepare these glazes. Second, pectin can provide the desired thermoreversibility of the system. Third, the use of pectin is compatible with an acid product like a glaze, which typically has a pH below 4.

Pectin molecules are comprised of linear chains containing 200 to 1000 D-galacturonic acid units linked together by alpha-1,4-glycosidic bonds. Some of the galacturonic acid units in the molecule are esterified and are thus present in the form of a galacturonic acid methyl ester. The degree of esterification (D.E.) is defined as the ratio of esterified galacturonic acid units to the total of galacturonic acid units present in a molecule. Commercial pectins are divided in high ester (H.M., high methoxylation) and low ester (L.M., low methoxylation) pectins. In the present context, "esterification" is thus a synonym for "methoxylation".

High ester pectins or high methoxylation (H.M.) pectins are pectins with a ratio of esterification > 50%. H.M. pectins jellify only in high brix systems (brix > 55°) and low pH (pH around 3). High brix systems favorize the formation of hydrophobic junction zones while H+ neutralizes the (negatively charged) pectin molecules, thereby decreasing any repulsion forces existing between them. The gels obtained are thermostable, in the sense that they don't melt completely upon heating.

Low ester pectins or low methoxylation (L.M.) pectins are pectins with a ratio of esterification < 50%. They are obtained by mild acidic or alkaline treatment of H.M. pectins. If ammonia is used in an alkaline deesterification process, the pectin will be amidated resulting in an amidated low ester pectin. The degree of amidation (D.A.) is defined as the ratio of amidated galacturonic groups to the total amount of galacturonic units present in a molecule. In Europe the amidation level is restricted by law to a maximum of 25 %.

The gelling mechanism of L.M. pectins differs from that of H.M. pectins. Whereas the brix and the pH remain important factors in the gelling mechanism, calcium ions (Ca²⁺) and other divalent or monovalent ions now also play a crucial role in this mechanism. The lower the D.M. (degree of methoxylation), the higher is the Ca²⁺ reactivity. The higher the D.A. (degree of amidation), the higher is the Ca²⁺ reactivity. Low ester pectins can form gels at lower brix and higher pH than high ester pectins. The gels obtained can often be completely remelted upon heating, id est they are thermoreversible gels in contrast to gels obtained with high ester pectins (see above).

When working with pectins, the brix and especially the pH have to be precisely controlled: brix +/-1°, pH +/- 0.1 pH unit.

Pectin being the first choice of gelling agent for making a glaze, other gelling agents can be used for their thermoreversibility and/or thixotropic properties.

The most common gelling agents that are used in a glaze, after pectins, are carrageenans. The latter are extracted from red seaweeds and can be divided in 3 main groups: kappa, iota and lambda carrageenans.

Kappa carrageenans give rise to brittle thermoreversible gels. The gel formation is induced by ions: K⁺ > Ca²⁺ > Na⁺, with potassium ions having the biggest influence, then calcium and finally sodium ions. Kappa carrageenans are considered second choice for glaze manufacturing because they are not naturally present in fruits, provide generally less shiny glazes, because the mouthfeel of the gels obtained therewith is not very pleasant and finally because they are quite sensitive to hydrolysis (which implies that they can be more easily destroyed during use).

Iota carrageenans give rise to thixotropic gels, which are also induced by cations: Ca²⁺ > K⁺ > Na⁺, with calcium ions having the biggest influence in this case, then potassium and then sodium ions.

Lambda carrageenans do not jellify and only provide viscous solutions.

Another gelling agent that may be used is agar. Agar is a red-purple seaweed extract. It also forms thermoreversible gels with a wide difference between the melting and gelling temperature. Cations have no influence on its gelling properties. Agar gives rise to a gel with a soft spreadable texture.

Alginates are also used in the glaze manufacturing industry. Despite the fact that they are considered as gelling agent, they are not used as such. As a matter of fact, they form thermostable gels with Ca²⁺ ions. In the absence of Ca²⁺ they act as a simple viscosifier. They can as such be used in combination with low D.E. (degree of esterification) pectins. Alginates, however, can form thermoreversible gels with high D.M. pectins.

Viscosifying agents differ from a gelling agent by the fact that, when dissolved in water, they increase the viscosity of the solution without setting and without forming a gel. The solution remains liquid.

The most commonly used viscosifying agents include but are not limited to guar gum, locust bean gum, xanthan gum, modified cellulose, arabic gum, ...

Their viscosity profile is function of the temperature. In general, the viscosity will decrease when the temperature increases.

Viscosifying agents are sometimes used in glazes to provide sufficient viscosity to the glaze in its liquid form in order to allow it to stay on the product before the jellification occurs. Combinations of gelling agents (such as pectins or carrageenans) and viscosifying agents can also lead to a different texture. Furthermore, in some cases synergistic effects have been observed (for instance when carrageenans are used with locust bean gum; xanthan gum is used with locust bean gum; high D.M. pectins are used with alginate; and xanthan is used with guar gum).

When used by the baker, traditional concentrated glazes are heated in a pan above 80°C. At this temperature, the glaze is dissolved. The solution is then applied for instance with a brush on the product. While cooling down, the solution will gellify and set on the product. After setting, the glazed pastry products such as tarts can be cut easily since the glaze is gelled and cut-able. Those glazes are the most traditional ones but have a series of disadvantages. First of all, they have to be diluted. This operation involves a weighing (of the glaze and the water) plus stirring to disperse the glaze. Second, they have to be warmed up to minimally 80°C. Certain glazes are difficult to melt. It can take a long time to melt the gels and the gels can get burnt in the pan. The utilization autonomy is quite short since the traditional gel can be used only while it is still liquid. If the total of the glaze is not used by the baker before jellification, he has to re-heat it to redissolve the gel before using it again. This leads to water evaporation and/or texture difference of the glaze afterwards. Fruits (especially strawberries, raspberries and the like) can also get damaged by the application of a warm solution on them.

Ready-to-use sprayable glazes are the second generation of glazes. They are derived from the concentrated ones, but they are applied with a spray machine as such since they are already diluted to a brix of about 45°-50°.

Low D.M. - high D.A. pectins and/or carrageenans once more are the most common gelling agents used for the manufacture of ready-to-use thermoreversible glazes. Once again, viscosifying agents can be used in combination with gelling agents to stabilize the product but in this case it is important that the product is liquid enough at higher temperatures (> 60°C) to assure a good sprayability.

Also here, a strict control of the brix and the pH of the glaze are needed to guarantee a proper functioning.

Ready-to-use sprayable glazes are pumped into a spray machine through for instance a spiral circulating in a water bath at a temperature of 60°C - 90°C. At this temperature, they appear as a liquid resulting from the dilution of a broken gel (whereas at ambient temperatures or temperatures below 35°C they appear as a gel). After spraying, the temperature drops very quickly, below the setting temperature of the glaze, allowing the glaze to gel on the tart. It also forms cut-able gels, allowing an easy division of the product in portions without any flowing down problems of the glazes. Those glazes are easier to use than the concentrated ones because they don't need to be diluted and prepared in a pan. Nevertheless, they also have the disadvantages linked to their thermoreversibility. The utilisation temperature is crucial. A good control, usage and maintenance of the spray machine are further important to obtain a good result. It is not possible to be very precise. The spraying surface of the gun being quite wide, it is almost impossible to glaze only parts of the tart without spraying around it (for example to glaze only the fruits decorating a cream cake without glazing the cream).

Another big disadvantage of the thermoreversible glazes (both concentrated or ready-to-use glazes) is the risk of burning of the baker or the worker using it.

Thixotropic glazes, which do not require heating to be used, also exist on the market. They appear as light gels at ambient temperatures, easily breakable upon stirring. They require stirring (application of shear stress) to become liquid or semi-liquid in appearance. Their brix is normally > 55° and their pH < 4. A strict control of brix and pH is also here necessary to guarantee the functionality.

After stirring, thixotropic glazes are liquid enough to be applied on the food products. After application and in the absence of stirring, they rebuild their viscosity so that they can stay on the product. Nevertheless, they never gel so much that they are well cut-able. They always remain viscous jellies, turning wet if touched with a finger. Those glazes are thus ideal for application on the top of bavarois but are not suitable for use on fruits tarts, viennoiseries, danishes, cakes, ...

International patent application WO 01/74176 relates to thixotropic shear thinning compositions that after shear thinning are liquid when added to a food product. The compositions form a gel only when incorporated into an uncooked food product like meat, poultry or sea fish. These gel-in-place compositions are added to the food products to produce food products with reduced liquid seepage. The disclosed gels comprise a mixture of a gellable polysaccharide and at least one gelling cation in an amount to form a thixotropic gel.
Document GB-A-2 078 082 discloses a fruit composition manufactured by heating fruit, sugar and water to cook the fruit and cause the sugar to be absorbed into the fruit. At least one gelling agent, preferably a low methoxyl pectin, and gel thickener are added to the cooked mixture.
Document WO-A-2004/005352 is related to a process for making de-esterified pectins, their composition and uses thereof. In this process, a pectin extract is first de-esterified using a biocatalyst. Secondly, the resulting high molecular weight de-esterified pectin is further de-esterified and optionally amidated using conventional methods, leading to low ester pectins providing gels of high gel strength.
Document EP-A-0 758 531 discloses a no and low fat mayonnaise or mayonnaise like composition including a continuous aqueous phase containing a semi-gelled system comprising a non-amidated or amidated galacturonic acid methyl ester with a degree of esterification below 55% (low methoxyl pectin) to replace part or all of the fat in order to make a mayonnaise that has organoleptic characteristics that imitates real mayonnaise.
Document US-B1-6,290,999 concerns a food composition, product and method of making thereof using tissue, such as vegetable, meat, fish or poultry. The tissue is coated with at least one coating, dried and fried. Initially the coating is a gel including water, hydrocolloid gel forming compounds and a cross-linking agent such as polyvalent cations. The coating at least partially encloses the outer surface of the tissue. The coating is dried prior to frying. The coating (initial, dried and fried) includes at least ten percent equivalent weight of cross-linking agent based on the neutralization equivalent weight of the hydrocolloid. The dried coating is adapted to substantially impede the penetration of oil therethrough. The coated fried products have a low concentration of cooking oil.
Document EP-A0 887 020 discloses a method for preparing milk product comprising mixing a low ester of pectin with an acidified milk product. Low ester of pectin has a calcium reactivity so that it develops a gel structure reminiscent of fruit fibres with the free Ca of the acidified milk product. This document also concerns a pectin composition as intermediate for the production of this milk product, which comprises an aqueous solution of a low ester of pectin.
Document "Nappage Cake Glaze" (2002, Herbstreith & Fox) refers to nappage or cake glaze and discloses application areas of nappage, types of nappage, requirements of nappage, production of nappage in a vacuum scrapped surface heat exchanger as well as recipes for production of nappage. In addition, this document discloses gelling mechanisms of amidated low methyl ester pectins and lists some amidated pectins for nappage produced by Herbstreith & Fox Company.
Document US-A-2,878,127 discloses a method for making food products using an aqueous sol of low methoxyl pectin having not more than about 7% methoxyl content and able to rapidly set up as a firm gel when contacted with a moist material such as icing or cake.

### Aims of the invention

The present invention aims to provide a glaze product which combines the advantages of the three pre-cited glazes, the thermoreversible concentrated, the thermoreversible ready-to-use and the cold thixotropic glaze.

Like the concentrated glaze, the glaze of the present invention should be applicable with a brush, allowing glazing of food products with precision such that it is possible to glaze only defined parts of the tarts. Like the sprayable glaze, the product should be ready to use. Like the thixotropic glaze, the product should not require heating, but unlike the thixotropic glaze and like a thermoreversible glaze, the glaze according to the invention should set and form a cut-able gel after being applied on the tart. After jellification or gelling, the gel or glaze of the present invention should behave like a solid, should be easily cut-able, showing a perfect cut. With such characteristics, the glaze is designed for use on all types of pastry products including but not limited to fruits tarts, viennoiseries, cakes, ...

### Summary of the invention

The present invention relates to a non-jellified liquid or semi-liquid ready-to-use cold gelling pastry glaze composition suitable for providing a firm glaze on a food product that provides the Ca²⁺ ions and/or other ions needed for jellification, said glaze composition comprising a Ca²⁺ reactive low methoxylated - high amidated pectin, wherein said pastry glaze composition does not gel at ambient temperatures below 35°C before application on a food product; wherein the pastry glaze composition is chaterized by
- comprising a Ca²⁺ reactive low methoxylated - high amidated pectin having a degree of methoxylation between 25 and 37% and a degree of amidation between 14 and 22%,
- having a brix between 35° and 55°,
- having a pH below 4, and
- comprising a Ca²⁺ level ranging between 5 and 15 ppm in an amount that is insufficient for jellification before application on a food product.
The present application further discloses a pastry glaze, advantageously a ready-to-use pastry glaze, obtained by solubilizing a Ca²⁺ reactive low methoxylated pectin with a degree of methoxylation <50%, more preferably a Ca²⁺ reactive low methoxylated-amidated pectin with a degree of methoxylation <50% and a degree of amidation up to 30% but not 0% (id est between about 0% and about 30%, 0% not included), to form a pastry glaze
- that, advantageously at ambient temperatures (in its final form), before application, is liquid or semi-liquid in appearance, advantageously without gelling, and
- that contains Ca²⁺ ions and/or other ions needed for jellification in an amount that is insufficient for jellification before application;
so that the glaze will only jellify when applied onto a food product support that provides the extra amount of Ca⁺² ions and/or other ions needed for jellification.

Advantageously, the applied conditions (brix, pH and/or amount of Ca²⁺ or other gelling agents added) of the glaze solution according to the invention are such that they are insufficient for jellification of the glaze prior to application. Advantageously no extra Ca²⁺ is thus added to a glaze solution or glaze product according to the invention, or the amount of Ca²⁺ that is added is too low to allow setting of the gel at these suboptimal pH and/or brix conditions.

The present appplication further discloses for instance a ready-to-use pastry glaze, obtained by solubilizing a Ca²⁺ reactive low methoxylated pectin with a degree of methoxylation <50%, more preferably a Ca²⁺ reactive low methoxylated-amidated pectin with a degree of methoxylation <50% and a degree of amidation up to 30% but not 0% (id est between about 0% and about 30%, 0% not included), to form a pastry glaze
- that, at ambient temperatures (in its final form), before application, is liquid or semi-liquid in appearance, advantageously without gelling,
- that has a brix of about 30° to about 60°,
- that has an acid pH, preferably a pH below 4.5, and
- that contains Ca⁺² ions and/or other ions needed for jellification in an amount that is insufficient for jellification before application;
so that the glaze will only jellify when applied onto a food product support that provides the extra amount of Ca⁺² ions and/or other ions needed for jellification.

Advantageously, the glazes according to the invention are liquid or semi-liquid in nature/appearance at ambient temperatures, advantageously not requiring a heating step to become liquid or semi-liquid. Advantageously, the glazes according to the invention are cold gelling glazes, meaning that they gel at ambient temperatures (temperatures below 35°C) once applied onto a food product support. Advantageously no (pre) heating or chilling step is needed to obtain a firm gel.

Advantageously, the glazes according to the invention are non-gellified thixotropic glazes.

The glazes as also disclosed herein have a free natural Ca²⁺ level of up to about 50 ppm, preferably of about 15 ppm.

Advantageously, the Ca²⁺ reactive pectin comprised in a glaze according to the invention is a low methoxylated-high amidated pectin, well known in the art.

The Ca²⁺ reactive pectin comprised in a glaze as also disclosed herein is a low methoxylated-high amidated pectin with a degree of methoxylation between about 20 and about 40% and a degree of amidation between about 10 and about 25%.

In a preferred embodiment according to the invention, the Ca²⁺ reactive pectin comprised in a glaze according to the invention has a degree of methoxylation of 28% and a degree of amidation of 22%.

In another preferred embodiment according to the invention, the Ca²⁺ reactive pectin comprised in a glaze according to the invention has a degree of methoxylation of 36% and a degree of amidation of 14%.

In another preferred embodiment according to the invention, the Ca²⁺ reactive pectin comprised in a glaze according to the invention has a degree of methoxylation of 25% and a degree of amidation of 21%.

In another preferred embodiment according to the invention, the Ca²⁺ reactive pectin comprised in a glaze according to the invention has a degree of methoxylation of 32% and a degree of amidation of 18%.

In yet another preferred embodiment according to the invention, the Ca²⁺ reactive pectin comprised in a glaze according to the invention has a degree of methoxylation of 37% and a degree of amidation of 15%.

Advantageously a low methoxylated pectin as defined above may be combined with a low methoxylated-amidated pectin as defined above, and/or preferably with a low methoxylated-high amidated pectin as defined above, in a glaze according to the invention.

Advantageously the firmness of a gelling glaze according to the invention, which advantageously is a cold gelling glaze, is at least multiplied by factor 2 after contact with (after being applied onto) the food product support.

Advantageously a glaze according to the invention results in a cut-able gel after contact with (after being applied onto) a food product support. Advantageously the amount of Ca⁺² ions or the like (other gelling cations, see infra) that are naturally present in a food product are sufficient to trigger jellification and to yield the desired end product. The food product advantageously needs not to be (pre) dusted with Ca⁺² ions to achieve the desired result: the formation of a firm gel, that is well cut-able, advantageously shows a perfect cut and allows an easy division of the (food) product in portions without any flowing down problems of the glaze.

Advantageously the food product that provides the extra amount of Ca⁺² ions or the like needed to trigger gellification is one selected from the list consisting of bakery cream, cakes, bread, danish pastry, puffed pastry and fruits and/or any combination thereof. Fruits may for instance be fruits selected from the list consisting of apricots, pineapple, pears, kiwis and oranges.

Advantageously the glazes according to the invention allow glazing of food products with precision, for instance with a brush.

The glazes according to the invention may further comprise another gelling agent and/or a viscosifier. If further gelling agents and/or viscosifiers are comprised into a glaze product according to the invention, they are present in an amount insufficient to trigger gellification of the glaze according to the invention prior to application onto a food product.

The other or further gelling agent may be one selected from the group consisting of other pectins, gellan gum, carrageenans, agar and alginates.

The viscosifier may be one selected from the group consisting of guar gum, locust bean gum, xanthan gum, modified cellulose and arabic gum.

CaCl₂ may be added to the (initial) pastry glaze or glaze solution according to the invention when a lower Ca²⁺ reactive pectin is used (see examples infra). The amount of Ca⁺² ions added in this case is still insufficient to trigger gel formation before application upon a food product support.

The glazes according to the invention (any of the ones described above) are highly suitable for the glazing of a food product.

They are highly suitable for the formation of a easily cut-able gel on a food product, showing a perfect cut and allowing an easy division of the food product in portions without any flowing down problems of the glaze. The gel is obtained by simply applying the liquid to semi-liquid glaze upon the food product support, no (prior) heating and/or chilling step being required to obtain a firm gel. Gel formation advantageously sets in at ambient temperatures.

Another aspect of the invention concerns a food product that is glazed with a glaze according to the invention (any of the above described glazes). As mentioned supra the glaze that is formed advantageously is easily cut-able, advantageously shows a perfect cut and allows an easy division of the food product in portions without any flowing down problems of the glaze.

The glazes according to the invention are highly suitable for the glazing of any food product and in particular a food product selected from the group consisting of a tart or pastry decorated with bakery cream, a fruit tart, a cake, viennoiseries, danishes and bavarois.

### Detailed description of the invention

The present invention relates to a liquid or semi-liquid pastry glaze that is gelling only upon contact with a support such as a food product support. The present invention relates to a gelling glaze or glaze product which is obtained or obtainable by using or solubilizing a Ca²⁺ reactive pectin: a low methoxylated-high amidated pectin. Also disclosed herein is using or solubilizing a low methoxylated, preferably a low methoxylated-amidated pectin and/or any combination thereof (see *infra* for definitions). The applied conditions (brix, pH and/or amount of Ca²⁺ or other gelling agents added) of the glaze solution according to the invention are such that they are insufficient for jellification of the glaze prior to application.

By "semi-liquid" is meant a viscous liquid, that advantageously can be applied onto a food product with a brush and/or by cold spraying.

Advantageously no extra Ca²⁺ is thus added to a glaze solution or glaze product according to the invention, or the amount of Ca²⁺ that is added is too low to allow setting of the gel at these suboptimal pH and/or brix conditions.

The inventors surprisingly found that firm gels of high quality (see infra) can be obtained as such, the Ca-sensitivity of the glaze according to the invention being high enough to allow setting of the gel upon contact with a food product support, which (naturally) provides the extra amount of Ca⁺² ions or the like needed to trigger jellification. The food product needs not to be extra dusted with Ca⁺² ions or the like in order to obtain a firm gel.

Accordingly, the present invention relates to a non-jellified liquid or semi-liquid ready-to-use cold gelling pastry glaze composition suitable for providing a firm glaze on a food product that provides the Ca²⁺ ions and/or other ions needed for jellification, said glaze composition comprising a Ca²⁺ reactive low methoxylated - high amidated pectin, wherein said pastry glaze composition does not gel at ambient temperatures below 35°C before application on a food product; wherein the pastry glaze composition is characterized by
- comprising a Ca²⁺ reactive low methoxylated - high amidated pectin having a degree of methoxylation between 25 and 37% and a degree of amidation between 14 and 22%,
- having a brix between 35° and 55°,
- having a pH below 4, and
- comprising a Ca²⁺ level ranging between 5 and 15 ppm in an amount that is insufficient for jellification before application on a food product.
Also disclosed herein is a ready-to-use pastry glaze, obtained by solubilizing a Ca²⁺ reactive low methoxylated pectin with a degree of methoxylation <50%, more preferably a Ca²⁺ reactive low methoxylated-amidated pectin with a degree of methoxylation <50% and a degree of amidation up to 30% but not 0% (id est between about 0% and about 30%, 0% not included), to form a pastry glaze
- that, advantageously at ambient temperatures (in its final form), before application, is liquid or semi-liquid in appearance, without gelling, and
- that contains Ca⁺² ions and/or other ions needed for jellification in an amount that is insufficient for jellification before application;
so that the glaze will only jellify when applied onto a food product support that provides the extra amount of Ca⁺² ions and/or other ions (K⁺, H⁺, ...) needed for jellification.

Preferably the glazes as also disclosed herein have a brix of about 30° to about 60° and/or an acid pH below 4.5.

Also disclosed herein is a ready-to-use pastry glaze, obtained by solubilizing a Ca²⁺ reactive low methoxylated pectin with a degree of methoxylation <50%, more preferably a Ca²⁺ reactive low methoxylated-amidated pectin with a degree of methoxylation <50% and a degree of amidation up to 30% but not 0% (id est between about 0% and about 30%, 0% not included), to form a pastry glaze
- that, advantageously at ambient temperatures (in its final form), before application, is liquid or semi-liquid in appearance, without gelling,
- that has a brix of about 30° to about 60°,
- that has an acid pH, preferably a pH below 4.5,, and
- that contains Ca⁺² ions and/or other ions needed for jellification in an amount that is insufficient for jellification before application;
so that the glaze will only jellify when applied onto a food product support that provides the extra amount of Ca⁺² ions and/or other ions (K⁺, H⁺, ...) needed for jellification.

Advantageously, the glazes according to the invention are liquid or semi-liquid in nature/appearance at ambient temperatures. Advantageously, the glaze of the invention is a cold gelling glaze which means that gelling at ambient temperatures, id est at temperatures of below 35 °C, preferably at temperatures of between about 4°C to about 20°C, more preferably of between about 15°C and about 25°C, is possible once the glaze is applied upon a food product support. Advantageously no (pre)heating or chilling step is needed to obtain a firm gel.

Advantageously the glaze according to the invention is a non-gellified thixotropic glaze.

The glazes according to the invention with a liquid to semi-liquid texture at ambient temperatures before application, set upon application on or onto a food product support that provides the extra Ca²⁺ ions (or other ions: K⁺, H⁺) needed for jellification, and this at ambient temperatures. The glazes according to the invention are thus cold gelling glazes. The amount of Ca⁺² ions in a regular food product like any type of pastry is sufficient to trigger jellification of a glaze according to the invention.

Advantageously the glazes according to the present invention do not require further dilution with for instance water and/or do not require a heating step, for instance to melt a product with a jellified structure at ambient temperatures (temperature below 35°C) unlike needed for some glaze products known in the art.

The glazes according to the invention prior to utilization, id est prior to application onto a food product or food product support, advantageously have a "liquid" or "semi-liquid" texture at ambient temperatures.

The glazes according to the invention may comprise a flavour like a fruit flavour. It is however not recommended to add fruit juices, fruit extracts and/or fruit pieces, certainly not in an amount that Ca⁺² ions are made available therefrom in an extent that the glaze product will start gelling before application onto the food product.

The glazes according to the invention are examples of in-situ gelling glazes or gel-in-place compositions.

The glazes according to the present invention can be shear thinned but advantageously do not need to be shear thinned before application unlike some thixotropic glaze products known in the art. Eventually shear stress may be applied to a glaze composition according to the invention, whereby the glaze composition that is liquid to semi-liquid in nature before application of shear stress becomes some more liquid or fluid than it was before application of said shear stress.

A liquid or semi-liquid glaze according to the invention advantageously is easily applicable to food products and with precision, for instance by applying it with a brush or by cold spraying it onto the food product.

The ingredients of the glaze according to the invention will have a natural free Ca²⁺ level of 5 to 15 ppm. The amount of calcium ions present/available can also be controlled by complexing agents such as phosphates and citrates. It is known that Ca-reactive pectins are also reactive to other ions than Ca⁺².

The above combination allows preservation of a liquid to semi-liquid texture of the glaze before utilization or application and the jellification of the glaze after application only.

After application on or onto a food product, more ions (Ca²⁺, H⁺, K⁺, ...) become available (by transfer between the food product support and the glaze) to the pectin, allowing jellification of the glaze product. The extra amount of Ca²⁺ needed for jellification is thus provided by the food product support. The food support may also change pH and/or other conditions that favor gelling of the glaze. Also, advantageously no chilling or cooling step is required to evoke gel formation.

Besides the Ca²⁺ reactive pectin, other gelling agents and/or viscosifying agents may be added to the glaze solution or composition according to the invention. Such gelling agents include but are not limited to other types of pectins, carrageenans, gellan gum, agar, alginates or the like. When such gelling agents are added, they are added in an amount insufficient to trigger jellification of the glaze prior to application or utilization. Suitable viscosifying agents include but are not limited to guar gum, locust bean gum, xanthan gum, modified cellulose, arabic gum, .... The glaze composition according to the invention may further comprise a flavor.

The Ca²⁺ reactive pectin present in a glaze as also disclosed herein is a low methoxylated (L.M.) pectin and/or a low methoxylated-amidated pectin. Preferably low methoxylated-amidated pectins are used. Such pectins have a methoxylation degree that is lower than 50% and have an amidation degree that is between about 0% and about 30%, 0% not included, preferably between about 0% and about 25%, 0% not included%, more preferably between about 10% and about 25%. The latter are examples of low methoxylated-amidated pectins (D.M. <50%, D.A. up to 30% (but not 0%)).

Ca-sensitivity of a glaze can be obtained by using low methoxylated pectins per se, non-amidated low methoxylated pectins. Preferably the degree of methoxylation is then below about 15%, preferably below about 10%, more preferably below about 7% or even below about 5%. The lower the D.M. of the pectin, the higher is the Ca²⁺ reactivity of the glaze.

Ca-sensitivity of a glaze as also disclosed herein is evoked by incorporating into a glaze as also disclosed herein a low methoxylated-amidated pectin, id est a pectin with a methoxylation degree that is lower than 50% and with an amidation degree that is between about 0% and about 30% (0% not included), preferably between about 0% and about 25% (0% not included), between about 5% and about 25%, more preferably between about 10% and about 25%. Gels that are obtained with a glaze comprising a low methoxylated-amidated pectin are of superior quality to gels obtained with a low methoxylated pectin per se. They are for instance better cut-able. A low methoxylated-amidated pectin is more easily solubilized, processed and results in a better quality glaze (for instance better viscosity and good gelling).

Also disclosed herein are glazes comprising preferably low methoxylated-amidated pectins with a degree of methoxylation between about 10% and about 50%, between about 15 and about 45%, more preferably between about 20% and about 40%, or between about 24% and about 38%, and a degree of amidation between about 0% and about 30% (0% not included).

Especially preferred are low methoxylated-high amidated pectins as well known in the art (Industrial gums, 3rd edition, ed. by Roy Whistler and James Bemiller, 1993, p 261, p268 with typical degrees of amidation). Low methoxylated-high amidated pectins in a glaze according to the present invention have a degree of methoxylation between 25 and 37% and a degree of amidation between 14% and 22%. Also disclosed herein are low methoxylated-high amidated pectins with for instance a degree of methoxylation between about 20% and about 40%, such as between about 24% and about 38%; and a degree of amidation between about 10% and about 25%, between about 11% and about 24%, such as between about 13% and 23%.

The lower the D.M. and/or the higher the D.A. of the pectin, the higher is the Ca²⁺ reactivity of the glaze comprising such pectin. The use of a low methoxylated-high amidated pectin in a glaze according to the invention is highly advantageous as demonstrated below..

Pectins with a D.M. of between about 25% and about 37% and a D.A. of between about 14% and about 22% are used in a glaze according to the invention. Extremely advantageous are pectins with a D.M. of about 28% and a D.A. of about 22%; pectins with a D.M. of about 36% and a D.A. of about 14%, pectins with a D.M. of about 37% and a D.A. of about 15%; pectins with a D.M. of about 32% and a D.A. of about 18%; and pectins with a D.M. of about 25% and a D.A. of about 21%.

Before application, the glaze according to the invention will not set and gel. This will occur only after contact with a support, for instance for about 5 minutes to several hours (up to 24 hours), typically between 0.5 and 2 hours. This in-situ-gelling only is thought to be due to an ion transfer (Ca²⁺, Mg²⁺ H⁺, K⁺, Na⁺,...) between the support and the glaze or in dry conditions due to a concentration of the ions by evaporation.

The support or food product support that evokes this response - id est contains the necessary gelling ions - may be comprised of fruits such as apricots, pineapple, pears, kiwis, oranges etc with which tarts and other types of pastry are decorated. Also bakery cream, and other types of supports used in pastry can provide the same effect.

In contact with a suitable support such as apricots, the firmness of the cold gelling glaze (in grams) according to the invention is at least multiplied by factor 2, 3, 4, 5, 10 or 20 after a minimal time of contact, for instance one or several hours (up to 24 hours) of contact with the support.

When lower Ca²⁺ reactive pectins are used, adding of extra Ca²⁺ and/or a higher brix and/or a lower pH is/are most often necessary. For instance, up to about 50 ppm of Ca²⁺ might have to be added to the glaze composition, preferably in the form of CaCl₂, to get a similar product. The most important characteristic of the glaze according to the invention is that the product does not gel without contact with a substrate or support Other ions than calcium (for instance Na⁺, K⁺, Mg⁺⁺ and H⁺) can be used.

As explained supra, the lower the D.M. and/or the higher the D.A. of the pectin, the higher is the Ca²⁺ reactivity. The higher the D.M. of a L.M. pectin and/or the lower the D.A. of a L.M.-amidated pectin, the lower thus the Ca²⁺ reactivity. An example of a lower Ca²⁺ reactive pectin and a higher Ca²⁺ reactive pectin can be found in Table 3. For instance, when using a 28M-22A pectin no extra Ca⁺² was added to the glaze, whereas a Ca⁺² source was added when using a 36M-14A pectin. The person skilled in the art will know when to add extra gelling ions like Ca⁺², when to raise the brix and/or when to lower the pH to obtain the desired result. Some examples of the amounts of extra Ca⁺² needed to jellify low D.M. - high D.A. pectins, in function of the degree of methoxylation, the degree of amidation and the brix of a glaze invention, are given below.

**Table 2: Amount of extra Ca²⁺ (expressed in mg Ca²⁺/g of pectin), needed to jellify low D.M. - high D.A. pectins in function of the brix of the system, the extra Ca⁺² being provided by migration from the support**

| **D.M. / D.A.** | **62° brix** | **50° brix** | **30° brix** |
|---|---|---|---|
| **25 / 21** | 0 - 5 | 5 - 7.5 | 18 |
| **32 / 18** | 5 | 12.5 | 30 |
| **37 / 15** | 7.5 | 18 - 20 | 45 |

| | | | |
|---|---|---|---|
| D.M. degree of methoxylation D.A. degree of amidation | | | |

Advantageously, the glaze according to the invention is highly suited for glazing of pastry such as fruit tarts or other pastry products with a low pH.

The food product or fruit product support on which the glaze is applied can be a fruit tart, bavarois, viennoiseries, danishes, cakes,...

Food or pastry products provided with a glaze according to the invention have an excellent cut-ability, the glaze not being prone to flowing down, wetting and/or destabizilization upon cutting and/or upon storage for a few hours to several days.

Advantageously, the glaze according to the invention is ready-to-use, easily sprayable, spreadable or applicable so that it is possible to work precisely and to cover only specific parts of the food product (for instance the fruits) with the glaze, if wanted.

The present invention further relates to a production process to prepare a glaze according to the invention. This production process comprises at least the steps of solubilizing in water, a low methoxylated-high amidated pectin with degrees of methoxylation and amidation as defined above under conditions (brix, pH, amount of Ca²⁺ or other gelling ions added) that are insufficient for its jellification before contact with the product, to give rise to a (cold) in-situ gelling glaze with a brix of 35° to 55° and a pH below 4.

A preferred production process comprises the following steps:
- Mixing of the glucose syrup with the sugar and salts and the water
- Reach 70-90°C, 70-80°C, for instance 85°C to achieve sugar solubilization,
- Dispersing the Ca⁺² reactive pectin used (a low methoxylated-high amidated pectin, see above) with a high shear mixer,
- Adding the pectin solution to the sugar solution and mix until homogeneous,
   - Cooling down to about 60 °C and filling in containers.

The above production process is just an example of the production of a glaze according to the invention.

### Description of the figures

The figure 1A shows the nice cut-ability of an apricot tart foreseen 24 hours earlier with a cold gelling glaze according to the invention compared to the cut-ability of the same product provided with a cold thixotropic glaze as available on the market (Fig 1B).

The figure 2 presents different views on a mixed fruit tart foreseen with a cold gelling glaze according to the invention, revealing a perfect cut and a nice general texture. A: a cut through the tart revealing a perfect cut. Detailed top (B) and side (C) view.

The figures 3A-E present the evolution in time of the texture (firmness) of a cold gelling glaze (figs. 3A, B, D - time: 0, 24 and 48 hours respectively - max. peaks: 11.8, 19.4 and 28.4 respectively) and of a cold gelling glaze on apricots (figs. 3C, E - time: 24 and 48 hours respectively - max peaks: 118.4 and 139.2 respectively). The control measurement was performed at 25°C whereas all other measurements were done at a temperature of 10°C-12°C.

The figure 4 illustrates how the firmness (in grams) of a cold gelling glaze and a standard thixotropic glaze change in time when in contact with apricots.

The invention will now be described in further details in the following examples and embodiments by reference to the enclosed drawings, which are not in any way intended to limit the scope of the invention as claimed.

### Detailed description of the invention

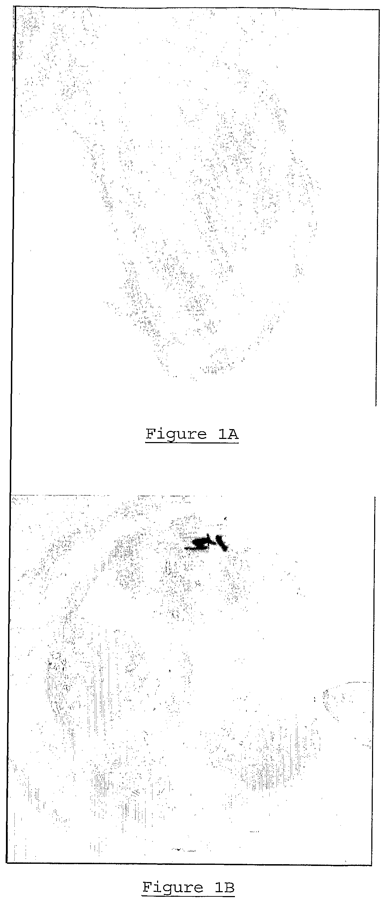

One of the advantages of the glaze of the present invention is the easy use and applicability and the excellent cut-ability of a glazed food product. The nice cut-ability of a product foreseen with a glaze according to the invention is evident from Figure 1. Figure 1A clearly shows the absence of flowing down of such a glaze compared to a standard thixotropic glaze (Fig 1B) and shows a perfect clean cut.

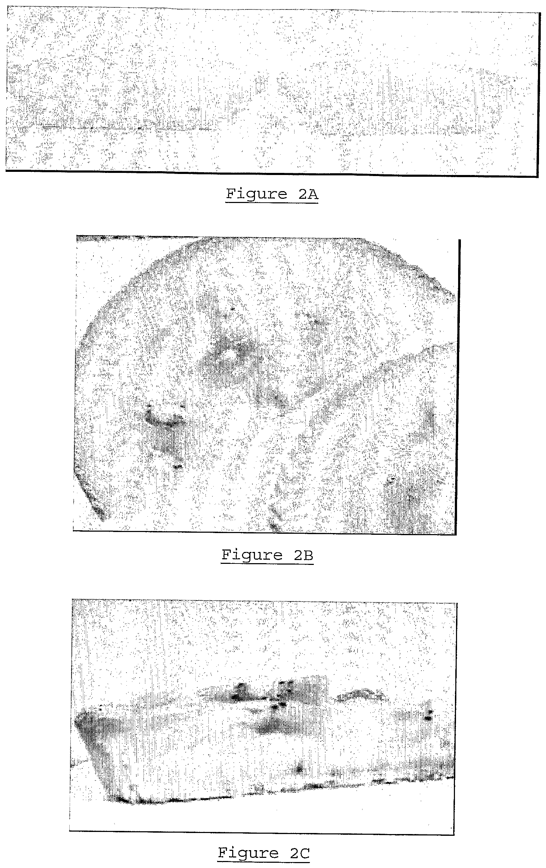

Fruit tarts provided with such a glaze preserve a nice texture and presentation, the glaze not being prone to flowing down, wetting and/or destabizilization (Figs 2A-C).

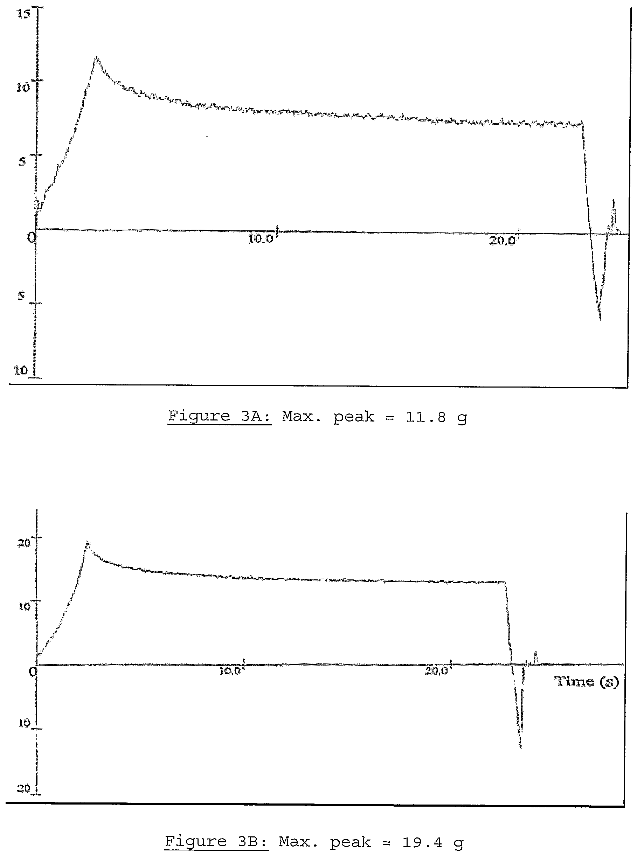

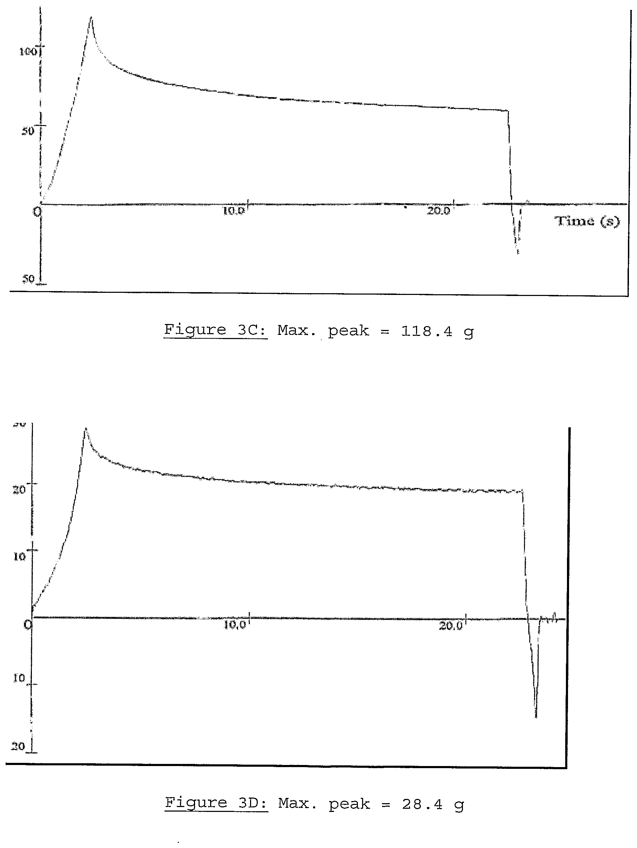

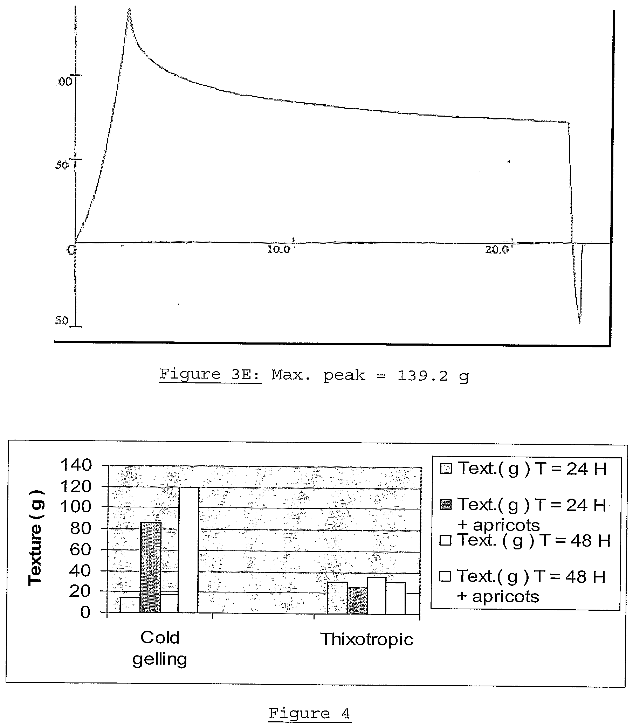

The excellent cut-ability of the glaze can be explained by the evolution of its texture (firmness) after application on the products. To study the texture evolution in time, 120 g of glaze was poured on about 46 to about 48g of apricots in a plastic beaker and then placed in a fridge. The initial (t=0) firmness was measured at 25°C (Fig. 3A), whereas the firmness after 24 and 48 hours respectively (t = 24 h, t = 48 h) was measured at 10°C-12°C (Figs. 3C and E). The same quantity of glaze poured in a beaker but without apricots, covered and placed in a fridge served as a control (Figs. 3B and D).

The above measurements were done with a texture analyzer (TAXT-2 of Stable Microsystems), probe of 2.54 cm diameter, compression target of 5.0 mm, trigger of 1.0 g, speed of 120 mm/min, hold of 20 sec; and recovery of 0 sec.

The Y-axis of Figures 3 A-E shows the resistance of the gel to penetration (force in grams) as measure for the firmness of the gel. The peak represents hereby the maximum resistance and expresses the force at the compression of 5 mm. At t=0, a maximum peak of 11.8 g was measured for the liquid or semi-liquid pastry glaze. After 48 hours a maximum peak of 28.4 g was registered for the control, whereas for the gel placed on apricots a maximum peak of 139.2 g was registered after a contact time of 48 hours. The increase in firmness of the gel placed on a suitable support like apricots is thus significant.

The difference in gelling capacity and firmness of the gel was remarkable when compared to the behavior of a standard thixotropic gel submitted to the same conditions. For instance, for a standard thixotropic glaze applied on apricots, the maximum peak after 48 hours was 30g only.

The cold gelling glaze of the invention is not jellified at time t = 0, but once in contact with the product (in this case apricots) the texture will evolve towards a firm gel as demonstrated above. This is not obtained without the contact of apricots or another suitable support. This results is probably obtained thanks to an ion transfer (Ca²⁺, Mg²⁺ H⁺, K⁺, Na⁺,...) between the support and the glaze. Other supports which can provide this same effect include but are not limited to fruits such as pineapple, pears, kiwis, orange etc. Also bakery cream, cakes, bread, danish pastry, puffed pastry and other types of supports can provide the same effect.

In contrast thereto, the cold thixotropic glaze shows a jellified texture from the beginning, which evolves very little in time even when in contact with the product. The texture of the gel even becomes slightly less firm after contact with the product.

It should be noticed that in practice a much thinner layer of glaze is applied on the food product so that the jellification will occur already after one hour depending of the support.

Below (Table 3), some possible recipes are given to prepare the cold gelling glaze according to the invention. The scope of the present invention is not limited to these particular recipes, however. Table 3 further summarizes texture (firmness) changes in time of the different glazes.

### Examples

### Example 1: Examples of recipes and texture evolution in time

The total Ca²⁺ level measured in products (recipes) 1 and 2 amounted to about 15 ppm, , for instance from about 5 to about 15 ppm. This Ca²⁺ level comes naturally from the ingredients used in the recipes. For recipes 3 and 4, wherein a pectin is used that is less reactive to calcium, 30 ppm of Ca²⁺ was added in the form of CaCl₂ to get a similar product. Recipe 4 does not fall within the claimed scope.

### Example 2: Process used to prepare cold gelling pastry glazes according to the invention

The process used to prepare these glazes according to the invention comprised the following steps:
- Mixing of the glucose syrup with the sugar and salts and the water
- Reaching 70-90°C, 70-80°C, for instance 85°C to achieve sugar solubilization,
- Dispersing the pectin used with a high shear mixer,
- Adding the pectin solution to the sugar solution and mix until homogeneous,
- Cooling down to about 60 °C and filling in containers.

From the examples given in Table 3, the following conclusions can be drawn:

First, it is possible to obtain a cold gelling glaze with a brix of about 35° to about maximally 60° with the desired properties. At this brix (brix about 60°), the texture doesn't change very much and is even weaker after 48 h than after 24 hours probably due to a too high water transfer of the fruit to the glaze.

Second, in contact with a support such as apricots in this case, the firmness of the cold gelling glaze with brix between about 35° and about 50° is multiplied, preferably multiplied by factor 5. In contrast therewith, the firmness of a thixotropic glaze is almost not influenced by the presence of apricots, becomes even a bit lower in this case (see also figure 4).

Third, it is already possible to obtain cold gelling glazes with a brix of about 35°, which will be quite liquid before application.

Fourth, it is possible to use pectins with a different esterification and amidation degree. With lower Ca²⁺ reactive pectin, added Ca²⁺ and/or a higher brix and/or a lower pH is necessary. The skilled person can adapt these parameters such that the gel in not increasing in firmness without contact with a support.

Finally, it is possible to combine the above pectins with another hydrocolloid.

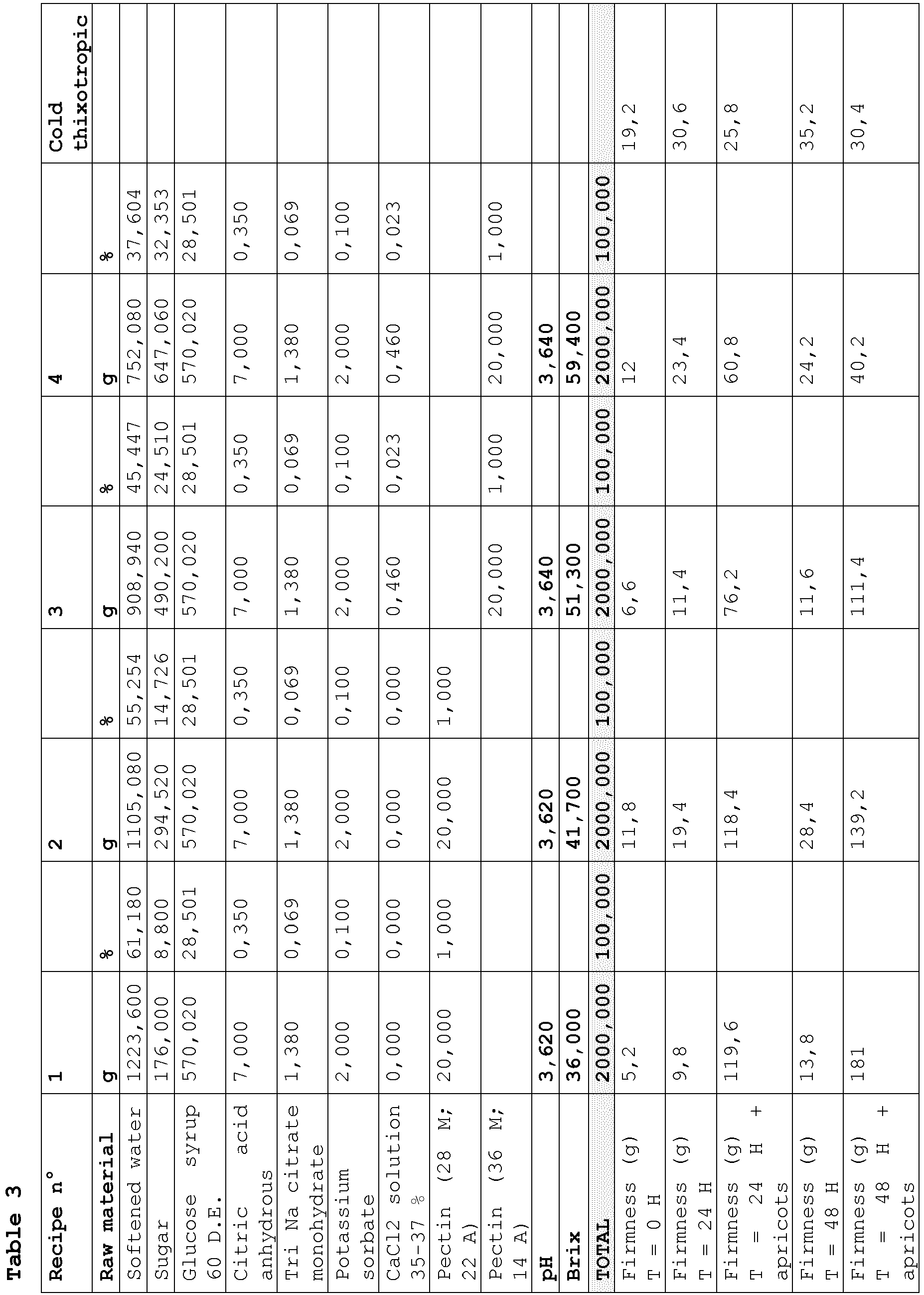

## Claims

1. Non-jellified liquid or semi-liquid ready-to-use cold gelling pastry glaze composition suitable for providing a firm glaze on a food product that provides the Ca²⁺ ions and/or other ions needed for jellification, said glaze composition comprising a Ca²⁺ reactive low methoxylated - high amidated pectin, wherein said pastry glaze composition does not gel at ambient temperatures below 35°C before application on a food product; wherein the pastry glaze composition is **characterized by**
- comprising a Ca²⁺ reactive low methoxylated - high amidated pectin having a degree of methoxylation between 25 and 37% and a degree of amidation between 14 and 22%,
- having a brix between 35° and 55°,
- having a pH below pH 4, and
- comprising a Ca²⁺ level ranging between 5 and 15 ppm in an amount that is insufficient for jellification before application on a food product.

2. Glaze composition according to claim 1, wherein
- the Ca²⁺ reactive pectin has a degree of methoxylation of 28% and a degree of amidation of 22%; or
- the Ca²⁺ reactive pectin has a degree of methoxylation of 36% and a degree of amidation of 14%; or
- the Ca²⁺ reactive pectin has a degree of methoxylation of 25% and a degree of amidation of 21%; or
- the Ca²⁺ reactive pectin has a degree of methoxylation of 32% and a degree of amidation of 18%; or
- the Ca²⁺ reactive pectin has a degree of methoxylation of 37% and a degree of amidation of 15%.

3. Glaze composition according to any of the preceding claims, further comprising another gelling agent and/or a viscosifier.

4. Glaze composition according to claim 3, wherein the other gelling agent is selected from the group consisting of other pectins, gellan gum, carrageenans, agar and alginates; and/or wherein the viscosifier is selected from the group consisting of guar gum, locust bean gum, xanthan gum, modified cellulose and arabic gum.

5. Use of the glaze composition according to any of the preceding claims for the glazing of a food product, wherein said food product provides the Ca²⁺ ions and/or other gelling ions needed for jellification.

6. Use according to claim 5, wherein said food product is selected from the list consisting of bakery cream, cakes, bread, danish pastry, puffed pastry and fruits and/or any combination thereof.

7. Use according to claim 6, whereby the fruits are selected from the list consisting of apricots, pineapple, pears, kiwis and oranges.

8. Use according to any one of claim 5 to 7 to form a cut-able gel on said food product, allowing the division of the product in portions without any flowing down problems of the glaze.

## Patentansprüche

1. Nichtgelierte, flüssige oder halbflüssige, verwendungsfertige, kaltgelierende Gebäckglasurzusammensetzung, die zur Bereitstellung einer festen Glasur auf einem Lebensmittelprodukt, das die Ca²⁺-Ionen und/oder andere Ionen liefert, die für das Gelieren erforderlich sind, geeignet ist, wobei die Glasurzusammensetzung ein Ca²⁺-reaktives, schwach methoxyliertes, stark amidiertes Pectin umfasst, wobei die Gebäckglasurzusammensetzung bei Umgebungstemperaturen von unter 35 °C vor dem Aufbringen auf ein Lebensmittelprodukt nicht geliert; wobei die Gebäckglasurzusammensetzung **gekennzeichnet ist durch**
- Umfassen eines Ca²⁺-reaktiven, schwach methoxylierten, stark amidierten Pectins mit einem Methoxylierungsgrad zwischen 25 und 37 % und einem Amidierungsgrad zwischen 14 und 22 %,
- einen Brix-Wert zwischen 35° und 55°,
- einen pH-Wert unter pH 4 und
- Umfassen eines Ca²⁺-Gehalts in dem Bereich zwischen 5 und 15 ppm in einer Menge, die für das Gelieren vor dem Aufbringen auf ein Lebensmittelprodukt nicht ausreicht.

2. Glasurzusammensetzung gemäß Anspruch 1, wobei
- das Ca²⁺-reaktive Pectin einen Methoxylierungsgrad von 28 % und einen Amidierungsgrad von 22 % aufweist; oder
- das Ca²⁺-reaktive Pectin einen Methoxylierungsgrad von 36 % und einen Amidierungsgrad von 14 % aufweist; oder
- das Ca²⁺-reaktive Pectin einen Methoxylierungsgrad von 25 % und einen Amidierungsgrad von 21 % aufweist; oder
- das Ca²⁺-reaktive Pectin einen Methoxylierungsgrad von 32 % und einen Amidierungsgrad von 18 % aufweist; oder
- das Ca²⁺-reaktive Pectin einen Methoxylierungsgrad von 37 % und einen Amidierungsgrad von 15 % aufweist.

3. Glasurzusammensetzung gemäß einem der vorstehenden Ansprüche, ferner umfassend ein weiteres Geliermittel und/oder ein Verdickungsmittel.

4. Glasurzusammensetzung gemäß Anspruch 3, wobei das weitere Geliermittel ausgewählt ist aus der Gruppe bestehend aus anderen Pectinen, Gellangummi, Carrageenan, Agar und Alginaten; und/oder wobei das Verdickungsmittel ausgewählt ist aus der Gruppe bestehend aus Guargummi, Johannisbrotkernmehl, Xanthangummi, modifizierter Cellulose und Gummi arabicum.

5. Verwendung der Glasurzusammensetzung gemäß einem der vorstehenden Ansprüche zum Glasieren eines Lebensmittelprodukts, wobei das Lebensmittelprodukt die Ca²⁺-Ionen und/oder andere gelbildende Ionen, die für das Gelieren erforderlich sind, liefert.

6. Verwendung gemäß Anspruch 5, wobei das Lebensmittelprodukt ausgewählt ist aus der Liste bestehend aus Backcreme, Kuchen, Brot, Plundergebäck, Blätterteiggebäck und Früchten und/oder jeder Kombination davon.

7. Verwendung gemäß Anspruch 6, wobei die Früchte ausgewählt sind aus der Liste bestehend aus Aprikosen, Ananas, Birnen, Kiwis und Orangen.

8. Verwendung gemäß einem der Ansprüche 5 bis 7 zur Herstellung eines schneidbaren Gels auf dem Lebensmittelprodukt, um Teilen des Produkts in Portionen ohne Probleme mit Herunterfließen der Glasur zu erlauben.

## Revendications

1. Composition de glaçage de pâtisserie gélifiant à froid, prête à l'emploi, liquide ou semi-liquide et non gélifiée, convenable pour fournir un glaçage ferme sur un produit alimentaire qui apporte les ions Ca²⁺ et/ou d'autres ions nécessaires à la gélification, ladite composition de glaçage comprenant une pectine faiblement méthoxylée-hautement amidée et réactive avec Ca²⁺, où ladite composition de glaçage de pâtisserie ne se gélifie pas à des températures ambiantes inférieures à 35°C avant l'application sur un produit alimentaire ; où la composition de glaçage de pâtisserie est **caractérisée en ce qu'**elle
- comprend une pectine faiblement méthoxylée-hautement amidée et réactive avec le Ca²⁺, ayant un degré de méthoxylation compris entre 25 et 37% et un degré d'amidation compris entre 14 et 22% ;
- possède un degré Brix compris entre 35° et 55° ;
- possède un pH inférieur à pH 4 ; et
- comprend un taux en Ca²⁺ compris entre 5 et 15 ppm en une quantité qui est insuffisante pour une gélification avant application sur un produit alimentaire.

2. Composition de glaçage selon la revendication 1, dans laquelle
- la pectine réactive avec Ca²⁺ possède un degré de méthoxylation de 28% et un degré d'amidation de 22% ; ou
- la pectine réactive avec le Ca²⁺ possède un degré de méthoxylation de 36% et un degré d'amidation de 14% ; ou
- la pectine réactive avec le Ca²⁺ possède un degré de méthoxylation de 25% et un degré d'amidation de 21% ; ou
- la pectine réactive avec le Ca²⁺ possède un degré de méthoxylation de 32% et un degré d'amidation de 18% ; ou
- la pectine réactive avec le Ca²⁺ possède un degré de méthoxylation de 37% et un degré d'amidation de 15%.

3. Composition de glaçage selon l'une quelconque des revendications précédentes, comprenant en outre un autre agent gélifiant et/ou un agent viscosifiant.

4. Composition de glaçage selon la revendication 3, dans laquelle l'autre agent gélifiant est choisi dans le groupe constitué par d'autres pectines, la gomme gellane, les carraghénanes, l'agar-agar et les alginates ; et/ou l'agent viscosifiant est choisi dans le groupe constitué par la gomme guar, la gomme de caroube, la gomme xanthane, la cellulose modifiée et la gomme arabique.

5. Utilisation de la composition de glaçage selon l'une quelconque des revendications précédentes pour le glaçage d'un produit alimentaire, où ledit produit alimentaire apporte les ions Ca²⁺ et/ou d'autres ions gélifiants nécessaires à la gélification.

6. Utilisation selon la revendication 5, dans laquelle ledit produit alimentaire est choisi dans la liste constituée par la crème de boulangerie, les gâteaux, le pain, le feuilleté danois, la pâte feuilletée et les fruits et/ou une combinaison quelconque de ceux-ci.

7. Utilisation selon la revendication 6, dans laquelle les fruits sont choisis dans la liste constituée par les abricots, l'ananas, les poires, les kiwis et les oranges.

8. Utilisation selon l'une quelconque des revendications 5 à 7, destinée à la formation d'un gel pouvant être coupé, sur ledit produit alimentaire, permettant la division du produit en portions sans aucun problème d'écoulement du glaçage.
